# EUROPEAN PATENT APPLICATION

(11) **EP 4 481 242 A1**
(43) Date of publication of application: **25.12.2024**
(21) Application number: 23756439.8
(22) Date of filing: 16.02.2023
(51) Int. Cl.: F16J 9/26, C08K 7/06, C08L 87/00, C08L 71/10, C08L 79/08, F16J 15/18, F16J 15/20, F16J 15/3284, C08K 3/02, C09K 3/10, F04B 39/00

(54) **SEALING RESIN COMPOSITION AND SEAL**

(30) Priority: 17.02.2022 JP 2022022749; 03.06.2022 JP 2022091237; 15.02.2023 JP 2023021927; 15.02.2023 JP 2023021929
(71) Applicant: NTN Corporation, Osaka-shi Osaka 530-0005 (JP)
(72) Inventor: YASUDA, Ken, Inabe-gun, Mie 511-0243 (JP)
(74) Representative: Marks & Clerk LLP
(86) International application number: PCT/JP2023/005430
(87) International publication number: WO 2023/157914

(57) **Abstract**

To provide a sealing resin composition and a seal that are capable of being used, in particular, in high temperature and high pressure gas, in particular hydrogen gas. A sealing resin composition is used in a piston ring 1 for sealing gas. When a molded body of the sealing resin composition is exposed to gas with a pressure of 82 MPa and a temperature of 200°C for 192 hours, a dimensional change rate of the molded body relative to the molded body before the exposure is ± 1.0% or less, a retention rate of the tensile strength of the molded body after the exposure is 80% or more as the tensile strength of the molded body before the exposure is defined as 100%. The tensile strength of the molded body of the sealing resin composition is 100 MPa or more by a measuring method based on ASTM D638.

## Description

### TECHNICAL FIELD

The present invention relates to a sealing resin composition used in a seal for sealing gas, and the seal. In particular, the present invention relates to a resin composition used in a piston ring of a hydrogen gas reciprocating compressors, and the piston ring.

### BACKGROUND ART

In a hydrogen station, many seals for sealing hydrogen gas are used in a hydrogen gas reciprocating compressor, an accumulator for accumulating the hydrogen gas, a dispenser for supplying the hydrogen gas to a fuel cell vehicle (FCV) and the like. Further, the FCV employs a seal used in a pressure reducing valve that reduces the pressure of hydrogen in a high-pressure tank and supplies the depressurized hydrogen gas to a fuel cell. Thus, the seal is required to be high in air-tightness for the hydrogen gas and to be usable for a long time in the hydrogen gas with high pressure.

In particular, a piston ring used as a seal in a hydrogen gas reciprocating compressor in a hydrogen station needs to endure a severe environment with high temperature and high pressure. Thus, the piston ring is required that its dimension hardly changes and the property change is small even when exposed to such an environment for a long time. A representative hydrogen gas reciprocating compressor includes a piston and a cylinder and compresses the hydrogen gas by reciprocating the piston relative to the cylinder. In such a reciprocating compressor, in order to seal the hydrogen gas in a gap between the piston and the cylinder, an annular piston ring is generally employed. The piston ring is mounted to an annular groove on the piston. In this case, an outer peripheral surface of the piston ring comes into contact with an inner peripheral surface of the cylinder and a side surface of the piston ring comes into contact with a side surface of the annular groove, so as to seal the hydrogen gas. The piston ring to be employed is required that its wear resistance is further improved in a severe environment with high temperature and high pressure. In the hydrogen station, the use temperature of the compressor is, for example, 150-200°C in Non-Patent Document 1.

For example, Patent Document 1 discloses a hydrogen gas reciprocating compressor and a piston ring used therein. Patent Document 1 discloses a resin piston ring that contains polytetrafluoroethylene (PTFE) resin, polyether ether ketone (PEEK) resin and polyimide (PI) resin and does not contain polyphenyl sulfide (PPS) resin, wherein a total amount of the polytetrafluoroethylene resin and one of the polyether ether ketone resin and the polyimide resin is 50 wt% or more relative to the whole of resins. Patent Document 1 discloses that the tensile strength of the piston ring is set in a range of 15-100 MPa, so that a sealing performance thereof can be maintained for a long driving time compared to a piston ring having the tensile strength out of the above-described range.

Further, Patent Document 2 discloses a ring-like resin sliding member used in a hydrogen gas reciprocating compressor. The sliding member is disposed on one component of a piston member and a cylinder liner so as to relatively slide on the other component (a slid member). Patent Document 2 discloses an amorphous carbon film is formed on both sliding surfaces of the sliding member and the slid member, so that a replacement lifetime due to wear of the sliding member can be extended. In the amorphous carbon film, the content of carbon is larger in a surface portion than in an inner portion. It is preferable that the amorphous carbon film does not contain sulfur. Further, it is preferable that the sliding member is, for example, a desulfurized member that is subjected to a treatment exposing to a hydrogen atmosphere before mounting the sliding member to a compressor.

Non-Patent Document 2 discloses development in resin having hydrogen resistance. In Non-Patent Document 2 a polymer alloy in which either one of nylon 11, nylon 6 / 66 and fluororesin is compounded by a specified rate, into polyvinyl alcohol based resin in which a side chain 1,2-diol or ethylene is introduced into a molecular chain, is evaluated about blister resistance (internal break due to bubbled hydrogen remaining in the resin) in a cycle repeating exposure to high pressure hydrogen and depressurizing.

### PRIOR ART DOCUMENTS

### PATENT DOCUMENTS

Patent Document 1: JP 2020-180600 A
Patent Document 2: JP 6533631 B

### NON-PATENT DOCUMENTS

Non-Patent Document 1: Report of 70 MPa hydrogen stand technical regulations committee, The High Pressure Gas Safety Institute of Japan, February, 2012
Non-Patent Document 2: Mitsuo Shibutani, Development of High-Pressure Gas Barrier Materials, NIPPON GOMU KYOKAISHI, vol. 88, 2015, p. 336-341

### SUMMERY OF THE INVENTION

### PROBLEMS TO BE SOLVED BY THE INVENTION

Patent Document 1 focuses on the tensile strength among various properties of the piston ring and sets the tensile strength in an appropriate range to maintain superior sealing performance of the piston ring for a long time even in a case in which the PPS resin is not compounded thereto. The tensile strength may be measured based on JIS K7161 (Plastics - Determination of tensile properties, Part 1: General principles).

Patent Document 2 does not refer to a resistance of the resin employed in the sliding member relative to the high pressure hydrogen gas. Further, the polymer alloy in Non-Patent Document 2 contains any one of nylon 11, nylon 6 and nylon 66 and fluororesin at a specified rate, however these resins are low in mechanical strength at a high temperature and thus might be deformed when used in high temperature and high pressure hydrogen gas.

An object of the present invention is, in order to solve such problems, to provide a sealing resin composition and a seal that are usable in high temperature and high pressure gas, in particular hydrogen gas.

### MEANS FOR SOLVING THE PROBLEMS

A sealing resin composition of the present invention is used in a seal for sealing gas. When a molded body of the sealing resin composition is exposed to the gas with a pressure of 82 MPa and a temperature of 200°C for 192 hours, a dimensional change rate of the molded body after the exposure is ± 1.0% or less, relative to the molded body before the exposure. In this description, the terminology of "molded body" means a molded body molded by a well-known method such as the injection molding, the compression molding and the extrusion molding, and means a component formed by machine-processing the molded body. Thus, the "molded body" also includes a sealing product (a piston ring, a valve body, a valve seat, a gland packing, a lip seal, etc.) . Further, in this description, the terminology of "gas" means general gas, which includes gaseous fuel or the like. Examples of the gas include hydrogen gas, natural gas, ammonia gas, etc.

When the molded body of the sealing resin composition is exposed to the gas with a pressure of 82 MPa and a temperature of 200°C for 192 hours, a retention rate of the tensile strength of the molded body after the exposure may be 80% or more as the tensile strength of the molded body before the exposure is defined as 100%.

The tensile strength of the molded body of the sealing resin composition may be 100 MPa or more by a measuring method based on ASTM D638.

A gas permeability of a base resin that is a main component of the sealing resin composition may be 4.0 × 10⁻¹² mol/ (m²·s·Pa) or less by a measuring method based on JIS K7126-1.

The base resin may be aromatic polyether ketone resin, thermoplastic polyimide (PI) resin, or polyamideimide (PAI) resin.

The gas may be hydrogen gas.

For example, in a hydrogen gas reciprocating compressor, a resin piston ring is used in a severe environment with high temperature and high pressure, and thus from a viewpoint of a pressure resistance and a wear resistance, a property (strength, elastic modulus, etc.) of the resin at a high temperature is more important than a property in a room temperature range. Further, since the resin is a viscoelastic body, it is also necessary to consider a viscoelastic property thereof. A sealing resin composition of the present invention is used in a seal for sealing gas. In the dynamic mechanical analysis of a molded body of the sealing resin composition, each of the storage modulus E₁' at a temperature of 30°C and the storage modulus E₂' at a temperature of 200°C is 4.0 × 10⁸ Pa or more.

A peak temperature of the loss tangent tan δ of the molded body of the sealing resin composition may be 150°C or more.

The storage modulus E₁' and the storage modulus E₂' may fulfill the formula of E₂' / E₁' = 0.70 to 1.0.

A base resin of the sealing resin composition may be aromatic polyether ketone resin, thermoplastic PI resin, or PAI resin. Further, the glass transition point of the aromatic polyether ketone resin may be 150°C or more.

The sealing resin composition may contain carbon material of which the content of a sulfur atom is 200 ppm or less. The carbon material may be at least one of carbon fiber, graphite, and coke powder. The total content of the carbon material (s) may be 5-50 vol% relative to the whole of the sealing resin composition.

The content of a sulfur atom in the molded body of the sealing resin composition may be 250 ppm or less.

A seal of the present invention is formed of the molded body of the above-described sealing resin composition. The seal may serve as a piston ring of a reciprocating compressor that compresses hydrogen gas.

### EFFECT OF THE INVENTION

In one aspect of the sealing resin composition according to the present invention, when the molded body of the sealing resin composition is exposed to the gas with a pressure of 82 MPa and a temperature of 200°C for 192 hours, the dimensional change rate of the molded body after the exposure is ± 1.0% or less, relative to the molded body before the exposure (more preferably, the retention rate of the tensile strength of the molded body after the exposure is 80% or more as the tensile strength of the molded body before the exposure is defined as 100%) . Thus, the molded body of the sealing resin composition can be used as a seal for a long time in the gas with high temperature and high pressure. In particular, the molded body of the sealing resin composition is suitable to a piston ring of a reciprocating compressor that compresses the hydrogen gas.

The gas permeability of the base resin that is a main component of the sealing resin composition is 4.0 × 10⁻¹² mol/ (m²·s·Pa) or less by a measuring method based on JIS K7126-1. Thus, the dimensional change and the property change of the molded body in the gas with high temperature and high pressure can be small.

In another aspect of the sealing resin composition according to the present invention, in the dynamic mechanical analysis of the molded body of the sealing resin composition, each of the storage modulus E₁' at a temperature of 30°C and the storage modulus E₂' at a temperature of 200°C is 4.0 × 10⁸ Pa or more. More preferably, the peak temperature of the loss tangent tan δ of the molded body of the sealing resin composition is 150°C or more. Since the storage modulus E₂' and the peak temperature of the loss tangent tan δ of the molded body are high, the molded body is hardly deformed and worn at the high temperature. Thus, the molded body of the sealing resin composition is suitable to a seal used, for example, in hydrogen gas with high temperature and high pressure. In particular, the molded body of the sealing resin composition is suitable to a piston ring of a reciprocating compressor that compresses the hydrogen gas.

Further, the storage modulus E₁' and the storage modulus E₂' fulfill the formula of E₂' / E₁' = 0.70 to 1.0. Thus, the change of the elastic modulus relative to the temperature is small, and in a case in which the sealing resin composition is applied to a seal, stable sealing performance can be maintained in a wide temperature range from a room temperature to a high temperature.

For example, when a sulfur component is mixed into the hydrogen gas in filling the FCV with the hydrogen gas that is compressed by the reciprocating compressor, performance of a fuel cell might be deteriorated. However, in the molded body of the above-described sealing resin composition, the content of the sulfur atom is 250 ppm or less. The amount of the sulfur component to be mixed into the hydrogen gas can be reduced without performing the desulfurizing treatment in a special atmosphere as described in Patent Document 2, and thus the performance deterioration of the fuel cell in the FCV can be suppressed.

### BRIEF DESCRIPTION OF THE DRAWINGS

Fig. 1 is a perspective view of an example of a piston ring formed of a sealing resin composition according to the present invention.
Fig. 2 is a sectional view of an example of a hydrogen gas reciprocating compressor including the piston ring formed of the sealing resin composition according to the present invention.
Fig. 3 is a result of a dynamic mechanical analysis (a relation between temperature and storage modulus E') of Test Example B4.
Fig. 4 is a result of a dynamic mechanical analysis (a relation between temperature and loss tangent tan δ) of Test Example B4.
Fig. 5 is a general view of a pin-on-disk tester.

### MODE FOR CARRYING OUT THE INVENTION

The present inventors found that a sealing resin composition suitable to be used in high temperature and high pressure gas can be obtained by setting the dimensional change and the property change of a molded body of the resin composition when exposed to a specified condition, in the specified ranges. Further, the present inventors believed that it is necessary that the gas is difficult to invade the resin composition in order to obtain the resin composition having small dimensional change and small property change when exposed to the high pressure gas. Accordingly, the present inventors focused on the gas permeability based on JIS K7126-1 as a specific property and found that the sealing resin composition more suitable to be used in high temperature and high pressure gas can be obtained by employing the resin, as a main component, having the gas permeability of 4.0 × 10⁻¹² mol/ (m²·s·Pa) or less. Further, the present inventors found that a resin composition in which the storage modulus E₁' at a temperature of 30°C and the storage modulus E₂' at a temperature of 200°C in the dynamic mechanical analysis of the molded body of the resin composition, are within respective specified ranges, in addition a resin composition in which the loss tangent δ is within a specified range and a ratio of E₂' to E₁' fulfills a specified formula can be a sealing resin composition suitably used in, for example, high temperature (for example, approximately 100-200°C) and high pressure hydrogen gas. The present inventions are derived from such knowledge.

### FIRST EMBODIMENT

In a sealing resin composition of the first embodiment, when a molded body of the resin composition is exposed to gas with a pressure of 82 MPa and a temperature of 200°C for 192 hours, a dimensional change rate of the molded body relative to the molded body before the exposure is within ± 1.0% or less. In a case in which the dimensional change rate exceeds ± 1.0%, a specified sealing performance might not be obtained when a seal formed of the sealing resin composition is used in high temperature and high pressure gas.

The dimensional change rate can be measured using a dumbbell test piece based on ASTM D638. Specifically, the dimensional change rate can be obtained by measuring a length in any one direction of a thickness, a width of a center portion and a whole length of the dumbbell test piece before and after the exposure. However, the dimensional change rate may be obtained from a seal formed of the sealing resin composition. For example, the dimensional change rate of a piston ring can be obtained by measuring a length in any one direction of a thickness (a length in a radial direction) and a width (a length in a width direction). The dimensional change rate is preferably ± 0.5% or less, more preferably ± 0.2% or less.

The molded body of the sealing resin composition has preferably a retention rate of the tensile strength of 80% or more, more preferably 90% or more, when the molded body is exposed to the gas with the pressure of 82 MPa and the temperature of 200°C for 192 hours, as the tensile strength before the exposure is 100%. In a case in which the retention rate is less than 80%, the seal formed of the sealing resin composition might be easily deformed when the seal is used in the high temperature and high pressure gas.

The retention rate of the tensile strength can be measured using the dumbbell test piece based on ASTM D638. Specifically, the retention rate can be obtained by measuring the tensile strength before and after the exposure.

The tensile strength of the molded body of the sealing resin composition in the measuring method based on ASTM D638 is preferably 50 MPa or more, more preferably 80 MPa or more, and further more preferably 100 MPa or more. In particular, in a case in which the tensile strength is 100 MPa or more, the seal formed of the sealing resin composition can be prevented from being deformed when used in gas with high pressure of 65 MPa or more. However, it is necessary to compound much fiber filler such as carbon fiber in order for the extremely large tensile strength. Thus, the tensile strength of the molded body is preferably 220 MPa or less, or 180 MPa or less, from a viewpoint of obtaining both friction wear resistance and tensile strength.

The sealing resin composition contains base resin as a main component. The kind of the base resin is not especially limited, however the gas permeability based on JIS K7126-1 of the molded body of the base resin is preferably 4.0 × 10⁻¹² mol/ (m²·s·Pa) or less. Examples of the resin that meets such a numeral range include aromatic polyether ketone resin, thermoplastic PI resin and polyamideimide (PAI) resin. In a case in which the base resin is employed that has the gas permeability of more than 4.0 × 10⁻¹² mol/ (m²·s·Pa), the dimensional change and/or the property change of the molded body of the resin composition in the high temperature and high pressure hydrogen gas might be large. The gas permeability is more preferably 1.0-3.5 × 10⁻¹² mol/ (m²·s·Pa). The gas permeability means, for example, hydrogen gas permeability.

The base resin is preferably an injection-moldable resin. The inj ection-moldable resin enhances the freedom of design and thus can be applied to seals of various shapes.

### SECOND EMBODIMENT

In a sealing resin composition of the second embodiment, each of the storage modulus E₁' at a temperature of 30°C and the storage modulus E₂' at a temperature of 200°C in the dynamic mechanical analysis of the molded body of the resin composition is preferably 4.0 × 10⁸ Pa or more. In a case in which each of the storage moduli E₁' and E₂' is less than 4.0 × 10⁸ Pa, when the sealing resin composition is used as, for example, a seal for sealing high pressure hydrogen gas, the seal is largely deformed in use, and thus a specified sealing performance might not be obtained.

In this description, the storge modulus E', the loss modulus E", and the loss tangent tan δ are measured by the dynamic mechanical analysis in a tensile mode at a measurement frequency of 10 Hz, using the molded body of the sealing resin composition.

The storage modulus E₁' at the temperature of 30°C is preferably 1.0 × 10⁹ Pa or more, more preferably 2.0 × 10⁹ Pa or more. The storage modulus E₁' may be, for example, 1.0 × 10¹⁰ Pa or less, or 6.0 × 10⁹ Pa or less.

The storage modulus E₂' at the temperature of 200°C is preferably 1.0 × 10⁹ Pa or more, more preferably 2.0 × 10⁹ Pa or more. The storage modulus E₂' may be, for example, 1.0 × 10¹⁰ Pa or less, or 6.0 × 10⁹ Pa or less.

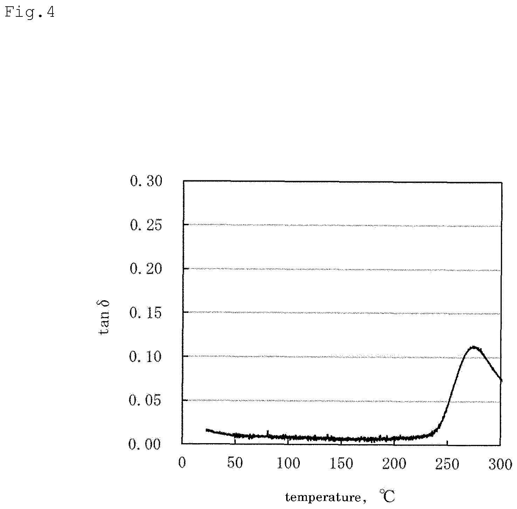

The loss tangent tan δ is a value of the loss modulus E" divided by the storage modulus E', which is tan δ = (E"/E'). The loss tangent tan δ is calculated using the storage modulus E' and the loss modulus E" at each temperature. The peak temperature of the loss tangent tan δ is the maximal value in a tan δ curve obtained by plotting the loss tangent tan δ at each temperature calculated from the storage modulus E' and the loss modulus E" at each temperature (for example, see Fig. 4) .

The peak temperature of the loss tangent tan δ is not especially limited, and is preferably 150°C or more, more preferably 170°C or more, further more preferably 200°C or more, or 250°C or more. The upper limit of the peak temperature of the loss tangent tan δ is not especially limited, and may be, for example, 400°C or less, or 300°C or less. The peak of the tangent tan δ is, for example, 0.03-0.30.

The sealing resin composition preferably fulfills the formula of (E₂' / E₁' = 0.30 to 1.0) . With the sealing resin composition that fulfills the above-described formula, the change of the elastic modulus of the molded body within a temperature of 30-200°C can be suppressed and stable sealing performance can be maintained in this temperature range. The sealing resin composition more preferably fulfills the formula of (E₂' / E₁' = 0.50 to 1.0), further more preferably fulfills the formula of (E₂' / E₁' = 0.70 to 1.0) . Further, the sealing resin composition may fulfill the formula of (E₂' / E₁' = 0.80 to 1.0). The ratio (E₂' / E₁') may be less than 1.0.

The hydrogen gas reciprocating compressor possibly repeats a compressing action of the hydrogen gas within the range of, for example, 30-200°C. Thus, by setting the ratio of the storage modulus in a high temperature range to the storage modulus in the room temperature range as described above, the reducing rate from the storage modulus E₁' at 30°C to the storage modulus E₂' at 200°C can be decreased. As a result, stable sealing performance can be easily maintained in a wide temperature range from the room temperature range to the high temperature range.

The dynamic mechanical property such as the storage modulus E', the loss modulus E" and the loss tangent tan δ was measured on a strip-shaped test piece formed of the resin composition under a condition with a tensile mode, a distance between chucks of 20 mm, a frequency of 10 Hz, strain amplitude of 10 µm (sine wave) and a temperature increasing rate of 2 °C/minute, using, for example, the dynamic mechanical analyzer DMS6100 (Hitachi High-Tech Science Corporation). As the measurement result, the storage modulus E', the loss modulus E" and the loss tangent tan δ at each temperature are obtained. Further, as the storage modulus E' at a specified temperature (30°C, 200°C), the storage modulus E₁' and the storage modulus E₂' are respectively obtained. The size of the strip-shaped test piece is not especially limited, and may be, for example, 2 mm × 5 mm × 45 mm.

The sealing resin composition contains the base resin as a main component. The kind of the base resin is not limited, however the resin is preferable that easily sets the storage moduli E₁' and E₂' of the molded body of the resin composition, the peak temperature of the loss tangent tan δ and the ratio (E₂' / E₁') in respective desired ranges. Specifically, it is preferable to select a resin having high glass transition point as the base resin in order for high peak temperature of the loss tangent tan δ. A well-known method may be employed to measure the glass transition point. For example, the peak temperature of the loss tangent tan δ in the dynamic mechanical analysis may be deemed as the glass transition point, or the glass transition point may be measured by a Differential scanning calorimetry (DSC). In this invention, the base resin preferably has the glass transition point of 140°C or more measured by the DSC.

In a case in which the glass transition point is high, the peak temperature of the loss tangent tan δ becomes high, and thus the storage modulus E' is maintained without being largely deteriorated, up to around the peak temperature of the loss tangent tan δ. In order to set the peak temperature of the loss tangent tan δ to 150°C or more, the base resin may employ, for example, aromatic polyether ketone resin, thermoplastic PI resin, thermosetting PI resin, or PAI resin. Further, in order to fulfill the formula of (E₂' / E₁' = 0.70 to 1.0), it is especially preferable that the glass transition point of the base resin measured by the DSC is 200°C or more.

The storage moduli E₁' and E₂' , and the peak temperature of the loss tangent tan δ are preferably less in change between before and after the molded body of the sealing resin composition is exposed to the high temperature and high pressure gas. For example, in a case in which the molded body of the sealing resin composition is exposed to the gas with the pressure of 82 MPa and the temperature of 200°C for 192 hours, the change rate of each of the storage moduli E₁' and E₂' is preferably ±20% or less, more preferably ± 10% or less, relative to the molded body before the exposure. The change rate of the peak temperature of the loss tangent tan δ is preferably ± 10% or less, more preferably ± 5% or less. The above-described gas may be hydrogen gas.

It is preferable that the base resin is an injection-moldable resin. The injection-moldable resin enhances the freedom of design and thus can be applied to seals of various shapes.

Examples of the injection-moldable resin that can set the storage moduli E₁' and E₂', the peak temperature of the loss tangent tan δ and the ratio (E₂' / E₁') to respective desired ranges, include aromatic polyether ketone resin, thermoplastic PI resin, and PAI resin.

In the base resin, the gas permeability of the molded body of the base resin based on JIS K7126-1 is, for example, 7.0 × 10⁻¹² mol/ (m²·s·Pa) or less, preferably 4.0 × 10⁻¹² mol/ (m²·s·Pa) or less. For example, in a case in which the base resin having the gas permeability of more than 4.0 × 10⁻¹² mol/ (m²·s·Pa) is employed, the dimensional change or the property change of the molded body of the resin composition in the high temperature and high pressure gas might be large. The above-described gas permeability is more preferably 1.0-3.5 × 10⁻¹² mol/ (m²·s·Pa). The above-described gas may be hydrogen gas.

The specific composition of the sealing resin composition of the present invention is now described.

The aromatic polyether ketone resin is a general term of the resin in which benzene rings are bonded by an ether group and a ketone group, and is also called a polyaryl ether ketone resin. Examples of the aromatic polyether ketone resin include PEEK resin, polyether ketone (PEK) resin, polyether ketone ketone (PEKK) resin, and polyether ketone ether ketone ketone (PEKEKK) resin.

In a case in which the aromatic polyether ketone resin is employed, the PEEK resin that is relatively low in cost among the aromatic polyether ketone resins may be employed. The PEEK resin has a chemical structure represented by the following formula (1). The glass transition point of the PEEK resin measured by the DSC is 143°C. In the present invention, the PEEK resin having any average molecular weight and molecular weight distribution may be employed. The melt viscosity at the shear rate of 1,000/s and the temperature of 400°C of the PEEK resin is not especially limited. In the piston ring, the melt viscosity is preferably, for example, 200-500 Pa·s measured by a measuring method based on ISO 11443. With the melt viscosity within the above-described range, the wear resistance can be sufficiently secured while being enabled to be subjected to molding processing by the injection molding. The melt viscosity is more preferably 300-500 Pa·s.

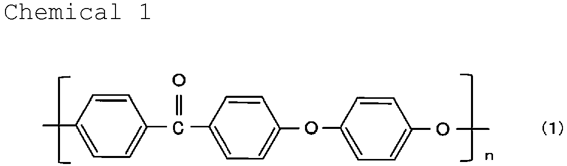

Considering the wear resistance at the high temperature, in particular a temperature of 150-200°C, the aromatic polyether ketone resin having the higher glass transition point than the PEEK resin is more preferable, and the aromatic polyether ketone resin having the glass transition point of 150°C or more measured by the DSC is especially preferable. Specifically, the PEK resin (glass transition point of 160°C), the PEKK resin (glass transition point of 160-165°C), or the PEKEKK resin (glass transition point of 170°C) may be employed. For example, the PEK resin has a chemical structure represented by the following formula (2).

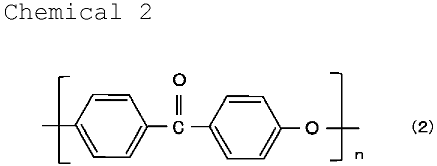

In a case in which the glass transition point of the aromatic polyether ketone resin measured by the DSC is 150-160°C, the melt viscosity at the shear rate of 1,000/s and the temperature of 400°C measured by a measuring method based on ISO 11443 may be 100-550 Pa·s. With the melt viscosity within the above-described range, the wear resistance of the piston ring used in, for example, the reciprocating compressor is sufficiently secured while being enabled to be subjected to molding processing by the injection molding. Further, in a case in which the glass transition point of the aromatic polyether ketone resin measured by the DSC is 160-170°C, the melt viscosity at the shear rate of 1,000/s and the temperature of 420°C may be 100-550 Pa·s. With the melt viscosity within the above-described range, the wear resistance of the piston ring used in, for example, the reciprocating compressor is sufficiently secured while being enabled to be subjected to molding processing by the injection molding.

The resin composition of the present invention may employ a combination of different kinds of aromatic polyether ketone resins having different melt viscosities. The aromatic polyether ketone resin does not contain the sulfur atom in the molecular structure as represented by the above-described formulas (1) and (2), however the aromatic polyether ketone resin might contain a solvent (for example, a solvent containing sulfur atom in its molecular structure, such as diphenyl sulfone) as an impurity, to be used in polymerization.

Examples of the specific PEEK resin as a commercially available product include PEEK 90P, PEEK 150P, PEEK 380P, PEEK 450P, and PEEK 650P produced by Victrex Japan Inc, and VESTAKEEP 1000P, VESTAKEEP 2000P, VESTAKEEP 3000P, VESTAKEEP 4000P, and VESTAKEEP 5000P produced by Polyplastics-Evonik Corporation. Further, a special PEEK resin having higher heat resistance than the general PEEK resin having the glass transition point of 143°C may be also employed. An example of the special PEEK resin as a commercially available product includes KetaSpire (registered trademark) PEEK XT-920 FP having the glass transition point of 170°C produced Solvay Specialty Polymers Japan K.K.

An example of the specific PEK resin as a commercially available product includes HT P22 produced by Victrex Japan Inc. An example of the specific PEKEKK resin as a commercially available product includes ST P45 produced by Victrex Japan Inc. Examples of the specific PEKK resin as a commercially available product include Kepstan (registered trademark) PEKK 6000 series, 7000 series and 8000 series produced by Arkema S.A.

Since the boiling point of the diphenyl sulfone is 379°C, in the molding process that injection-molds the sealing resin composition containing the aromatic polyether ketone resin as a base resin, the maximum temperature in a nozzle or a cylinder of an injection molding device is preferably set to 380°C or more at the measured temperature of the resin in order to eliminate the diphenyl sulfone. The measured temperature of the resin is more preferably 380-420°C, further more preferably 395-420°C. In order to set the measured temperature of the resin to 395-420°C, the PEK resin (the melting point of 373°C), the PEKK resin (the melting point of 358°C in the above-described 8000 series) or the PEKEKK resin (the melting point of 387°C) each having higher melting point than the PEEK resin (the melting point of 343°C) are preferably employed as a base resin because the injection molding condition can be easily adjusted.

In addition to the configuration of the molding process, in a case in which molding pellets are formed by a melt extruder, it is preferable that the maximum temperature in a nozzle or a cylinder of the melt extruder is set to 380°C or more at the measured temperature of the resin in order to easily eliminate the diphenyl sulfone. The measured temperature of the resin is more preferably 380-420°C, further more preferably 395-420°C. In order to set the measured temperature of the resin to 395-420°C, the PEK resin (the melting point of 373°C), the PEKK resin (the melting point of 358°C in the above-described 8000 series) or the PEKEKK resin (the melting point of 387°C) each having higher melting point than the PEEK resin (the melting point of 343°C) are preferably employed as a base resin because the melt extruding condition can be easily adjusted.

The thermoplastic PI resin employed as the base resin of the resin composition preferably has high glass transition point and high melting point and is capable of being subjected to melt molding such as injection molding. Specifically, the imide-based resin is preferable that has a structure in a recurring unit of the molecular structure as represented by the following formula (3). The structure has an imide group superior in thermal property and mechanical strength that surrounds an aromatic group and has a plurality of ether bonds showing appropriate melting performance when energy such as heat is applied thereto. In particular, the thermoplastic PI resin is preferable that has two ether bonds in the recurring unit for fulfilling the mechanical property, rigidity, heat resistance, and injection molding performance.

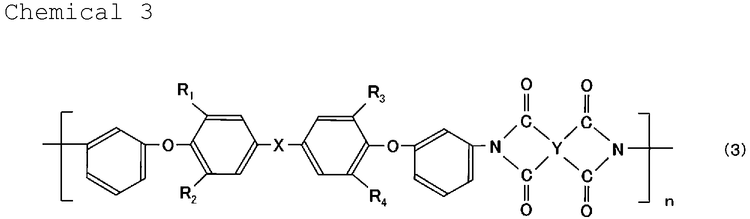

In the formula (3), X denotes a direct bond or a group selected from among a 1-10C hydrocarbon group, a hexafluoride isopropylidene group, a carbonyl group, a thiol group, and a sulfonyl group. R₁ to R₄ denote hydrogen, a 1-5C lower alkyl group, a 1-5 lower alkoxy group, chlorine, or bromine. R₁ to R₄ may be identical to each other or different from each other. Y denotes a tetravalent group selected from among a 2C or more aliphatic group, a cyclic aliphatic group, a monocyclic aromatic group, a condensed polycyclic aromatic group, a non-condensed polycyclic aromatic group in which aromatic groups are bonded to each other directly or via a cross-linking group.

Examples of the thermoplastic PI resin as a commercially available product include Aurum (registered trademark) produced by Mitsui Chemicals, Inc. and Therplim (registered trademark) produced by Mitsubishi Gas Chemical Company, Inc. Of these thermoplastic PI resins, Aurum represented by the formula (3) is especially preferable because the Aurum has the glass transition point of 250°C and the melting point of 388°C and thus is extremely superior in heat resistance. In Aurum, X is a direct bond and each of R₁ to R₄ is hydrogen in the formula (3). Examples of the grade of Aurum employed in the resin composition of the present invention include PD250, PD400, PD450 and PD500.

The PAI resin has an imide bond and an amide bond in its polymeric main chain. An example of the PAI resin includes an aromatic PAI resin in which the imide bond and the amide bond are bonded to each other via an aromatic group as represented by the following formula (4).

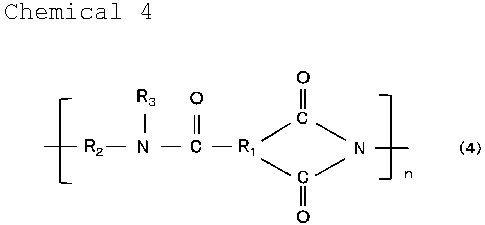

In the formula (4), R₁ denotes a trivalent aromatic group having at least one benzene ring. R₂ denotes a bivalent organic group. R₃ denotes hydrogen, a methyl group or a phenyl group.

Examples of the aromatic PAI resin include: PAI resin formed from aromatic primary diamine (for example, diphenylmethane diamine) and aromatic tribasic acid anhydride (for example, mono or diacylhalide derivative of trimellitic acid anhydride); and PAI resin formed from aromatic tribasic acid anhydride and an aromatic diisocyanate compound (for example, diphenylmethane diisocyanate).

An example of the PAI resin as a commercially available product includes Torlon (registered trademark) produced by Solvay Specialty Polymers Japan, K.K. An example of the grade of Torlon employed in the resin composition of the present invention includes 4000T.

The resin composition of the present invention contains preferably 50-95 vol% of the base resin, more preferably 60-90 vol% of the base resin, further more preferably 70-90 vol% of the base resin, or 70-80 vol% of the base resin, relative to the whole of the resin composition.

In the sealing resin composition of the present invention, in order to improve the strength, the elastic modulus and the friction and wear performance, it is preferable to compound a carbon material into the base resin such as the aromatic polyether ketone resin, the thermoplastic PI resin and the PAI resin. The "carbon material" in the description does not limit the presence/absence of the crystal and the degree thereof, and may unintentionally contain the sulfur atom. Examples of the carbon material include carbon fiber, graphite and coke powder. Of these materials, one carbon material may be employed alone, or alternatively a combination of two or more of them may be employed. The content of the sulfur atom in the carbon material is preferably 200 ppm or less, more preferably 100 ppm or less, especially preferably 50 ppm or less. Further, polytetrafluoroethylene (PTFE) resin that is a solid lubricant may be compounded into the base resin. It is preferable to compound at least one of the carbon material and the PTFE resin into the sealing resin composition of the present invention, and more preferable to compound both the carbon material and the PTFE resin into the sealing resin composition. The friction and wear performance is important in the seal serving as a moving seal such as a piston ring.

The content of the carbon material (the content (wt%) of each carbon material relative to the whole of the carbon materials (100 wt%)) is measured by a well-known method. For example, Inductively Coupled Plasma Mass Spectrometer (ICP-MS) may be employed. A triple quadrupole inductively coupled plasma mass spectrometer (ICP-MS/MS) may be also employed for the measurement with higher precision. An example of a preparation method before the analysis includes a method that filters a decomposed solution obtained through acid decomposition by a microwave sample preparation device and that obtains supernatant as an analysis sample. Whether or not the decomposition residue contains the sulfur atom may be checked by a known analysis method using an X-ray fluorescence analyzer.

Any of pitch based carbon fiber and PAN based carbon fiber that are classified based on raw material may be employed as the carbon fiber. The baking temperature is not limited, and thus either graphitized material baked at 2,000 °C or more and carbonized material baked at 1,000-1,500 °C may be employed. Any of milled fiber and chopped fiber may be employed, however the milled fiber having short fiber length is preferably employed from a view point of the friction and wear performance.

Examples of the milled fiber as a commercially available produce employed in the present invention include Kreca M-101S, M-101F, M-101T, M-104T, M-107T, M-201S and M-201F produced by Kureha Corporation. Further, examples of the PAN based carbon fiber include HT M800 160MU and HT M100 40MU produced by TEIJIN LIMITED and Trayca MLD-30 and MLD-300 produced by Toray Industries, Inc.

In the pitch based carbon fiber, the pitch in a raw material contains sulfur as an impurity. Further, in the PAN based carbon fiber, sulfur might remain after a surface treatment using sulfur. The PAN based carbon fiber of which the content of the sulfur atom is relatively low compared to the pitch based carbon fiber, is preferable as the carbon fiber.

The average fiber length of the carbon fiber employed in the present invention is not especially limited, however the carbon fiber is preferably a short fiber having the average fiber length of 20-200 µm. In a case in which the average fiber length is less than 20 µm, the wear resistance is hardly improved, while in a case in which the average fiber length is more than 200 µm, the carbon fiber that is broken during the sliding easily enters between the sliding surfaces, which causes the damage or wear of the cylinder or the like. The average fiber length in this description is the number-average fiber length.

The graphite is a solid lubricant that improves the friction and wear performance of the resin composition. Any of natural graphite and artificial graphite may be employed as the graphite. A shape of a particle may be a scaly shape, a granular shape, a spherical shape, or the like. Any shape may be employed. Examples of the graphite as a commercially available product employed in the present invention include the natural graphite ACP produced by Nippon Graphite Industries, Co.,Ltd., and the artificial graphite TIMREX KS-6, KS-25 and KS-44 produced by Imerys Graphite & Carbon Japan Ltd. Further, spherical graphite (or spherical carbon) obtained by baking the resin particles may be employed, for example, Bellpearl C800 or C2000 produced by Air Water Bellpearl Inc. that is obtained by baking the phenol resin particles may be employed. The median particle diameter (D₅₀) of the graphite may be, but not limited thereto, preferably 3-50 µm, and more preferably 10-30 µm. In a case in which the median particle diameter of the graphite is more than 50 µm, the tensile extension property of the resin composition might be deteriorated.

The coke powder improves the wear resistance of the resin composition. The median particle diameter of the coke powder may be, but not limited thereto, preferably 3-50 µm, and more preferably 10-30 µm. In a case in which the median particle diameter of the coke powder is more than 50 µm, the tensile extension property of the resin composition might be deteriorated.

The sealing resin composition contains at least one carbon material of the carbon fiber, the graphite and the coke powder. The sealing resin composition contains preferably 5-50 vol%, more preferably 5-35 vol%, further more preferably 5-25 vol% of the total of the carbon material, relative to the whole of the resin composition. In a case in which the total compound rate of the carbon material is less than 5 vol%, the wear resistance is hardly improved. In a case in which the total compound rate of the carbon material is more than 35 vol%, the melt viscosity of the resin composition is high, which becomes difficult to perform the injection molding for molding a molded body having a thin wall portion, and in a case in which the total compound rate of the carbon material is more than 50 vol%, the melt viscosity of the resin composition is extremely high, which becomes extremely difficult to perform the injection molding. For example, a combination of the carbon fiber and the graphite may be employed as the carbon material.

The PTFE resin is a solid lubricant that improves the friction and wear performance of the resin composition. As the PTFE resin, any of molding powder obtained through a suspension polymerization method, fine powder obtained through an emulsion polymerization method, and recycled PTFE may be employed. In order to stabilize the flowability of the resin composition, it is preferable to employ the recycled PTFE that is hardly fibered by the shearing in molding and hardly increases the melt viscosity. The recycled PTFE denotes heat-treated powder (heat hysteresis has been applied thereto), or powder that has been irradiated with γ rays or electron rays. Examples of the recycled PTFE include: powder formed by heat-treating the molding powder or the fine powder; powder formed by irradiating the powder formed by heat-treating the molding powder or the fine powder, with γ rays or electron rays; powder formed by grinding a molding body of the molding powder or the fine powder; powder formed by irradiating the powder formed by grinding a molding body of the molding powder or the fine powder, with γ rays or electron rays; powder formed by irradiating the molding powder or the fine powder with γ rays or electron rays; and powder formed by irradiating the molding powder or the fine powder with γ rays or electron rays and then heat-treated. The D₅₀ of the PTFE resin is not especially limited, but is preferably 10-50 µm.

Examples of the PTFE resin as a commercially available product employed in the present invention, include KTL-610, KTL-610A, KTL-450, KTL-350, KTL-8N, KTL-8F and KTL-400H produced by KITAMURA LIMITED; Teflon (registered trademark) 7-J and TLP-10 produced by Chemours-Mitsui Fluoroproducts Co.,Ltd.; Fluon G163, L150J, L169J, L170J, L172J, L173J and L182J produced by AGC Inc.; Polyflon M-15 produced by DAIKIN INDUSTRIES, LTD.; and Dyneon TF9205 and TF9207 produced by 3M Japan Limited. Further, PTFE resin modified by a perfluoroalkylether group, a fluoroalkyl group, or a side chain group containing other fluoroalkyl may be employed. The PTFE resins irradiated with γ rays or electron rays among the above-described PTFE resins correspond to KTL-610, KTL-610A, KTL-450, KTL-350, KTL-8N and KTL-8F produced by KITAMURA LIMITED; and Fluon L169J, L170J, L172J, L173J and L182J produced by AGC Inc.

The sealing resin composition preferably contains 5-25 vol% of the PTFE resin relative to the whole of the resin composition. In a case in which the compound rate of the PTFE resin is less than 5 vol%, the friction and wear resistance is hardly improved, while in a case in which the compound rate of the PTFE resin is more than 25 vol%, the tensile extension property of the resin composition might be deteriorated. The compound rate of the PTFE resin is more preferably 10-20 vol%.

The median particle diameter (D₅₀) of each of the PTFE resin, the graphite and the coke powder employed in the sealing resin composition of the present invention is the particle diameter of a point of which the accumulated value is 50% in an accumulated distribution as the particle diameter distribution and is measured by, for example, a particle diameter distribution measurement device using a laser light scattering method.

In addition to the carbon materials and the PTFE resin, a well-known additive for resin may be compounded into the sealing resin composition to such an extent that does not deteriorate an advantage of the present invention. Examples of the additive include glass fiber, aramid fiber, an inorganic matter (mica, talc, calcium carbonate, and boron nitride), whisker (calcium carbonate, and potassium titanate), a coloring agent (iron oxide, titanium oxide, and carbon black), and other resin component. In a case in which the content of the sulfur atom in the additive is more than 200 ppm, it is preferable that the compound rate of the additive is 3 vol% or less relative to the whole of the resin composition. The sealing resin composition may contain a carbon material that containing more than 200 ppm of the sulfur atom, however the content of the carbon material is preferably 3 vol% or less relative to the whole of the resin composition. It is preferable that the sealing resin composition does not contain sulfide such as molybdenum disulfide and tungsten disulfide.

Further, in a case in which resin other than the base resin is compounded into the sealing resin composition to such an extent that does not deteriorate the advantage of the present invention, it is preferable that the resin does not contain the sulfur atom in its molecular structure. Thus, it is preferable that the resin composition does not contain PPS resin, polyethersulfone (PES) resin, polysulfone (PSU) resin, and polyphenylsulfone (PPSU) resin each containing the sulfur atom in its molecular structure. The PPS resin contains the sulfur atom in its molecular structure as represented by the following formula (5). Also, each of the PES resin, the PSU resin, and the PPSU resin has a molecular structure including a sulphonyl group and thus contains the sulfur atom.

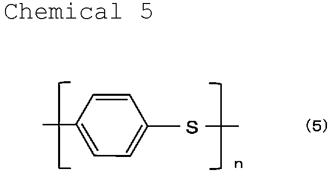

A combination of the aromatic polyether ketone resin and the resin that does not contain the sulfur atom in its molecular structure may be employed in the resin composition to such an extent that does not deteriorate the advantage of the present invention. The resin that does not contain the sulfur atom in its molecular structure is preferably the resin having the glass transition point of 150°C or more, and more preferably the thermoplastic PI resin. Examples of the thermoplastic PI resin as a commercially available product include Aurum (registered trademark) produced by Mitsui Chemicals, Inc. and Therplim (registered trademark) produced by Mitsubishi Gas Chemical Company, Inc. The glass transition point of Aurum is 250°C and the glass transition point of Therplim is 185°C.

As described above, an especially preferable aspect of the sealing resin composition of the first embodiment is an injection-moldable resin that contains resin having the hydrogen gas permeability of 4.0 × 10⁻¹² mol/ (m²·s·Pa) or less based on JIS K7126-1 as a base resin, and 5-35 vol% of the carbon material and 5-25 vol% of the PTFE resin, relative to the whole of the resin composition.

Further, an especially preferable aspect of the sealing resin composition of the second embodiment is an injection-moldable resin that has each of the storage moduli E₁' and E₂' of 4.0 × 10⁸ Pa or more (preferably 2.0 × 10⁹ Pa or more) and the peak temperature of the loss tangent tan δ of 150°C or more, and fulfills the formula of E₂E₁ = 0.5 to 1.0. Further, the resin composition contains 5-35 vol% of the carbon material and 5-25 vol% of the PTFE resin, relative to the whole of the resin composition.

A seal formed of the above-described sealing resin composition is suitably used in high pressure gas, in particular hydrogen gas. The seal is used at the high pressure of 30-120 MPa, preferably 65-110 MPa, further more preferably 80-100 MPa. The seal serving as a piston ring of a hydrogen gas reciprocating compressor is especially suitable as a seal used within such a pressure range in non-lubricating condition in hydrogen gas with a pressure of 82 MPa which is general configuration as a discharge pressure of the hydrogen gas reciprocating compressor in a hydrogen gas station. Further, the seal is especially suitable as a seal used in hydrogen gas with a pressure of 70 MPa which is general configuration as a tank internal pressure of the FCV.

An embodiment that employs the above-described resin composition in the piston ring is now described.

After the materials that form the above-described resin composition are mixed as needed using a Henschel mixer, an axial mixer, a ball mixer, a ribbon blender or the like, the materials are melt-kneaded using a melt extruder such as a twin-screw melt extruder to obtain molding pellets. Further, in the melt-kneading by the twin-screw melt extruder or the like, a side feed may be employed for charging the carbon material, the PTFE resin and the above-described additives for resin. The piston ring can be molded by the injection molding using the molding pellets. The piston ring having a specified shape may be formed through an additional processing or the whole processing on the injection-molded material.

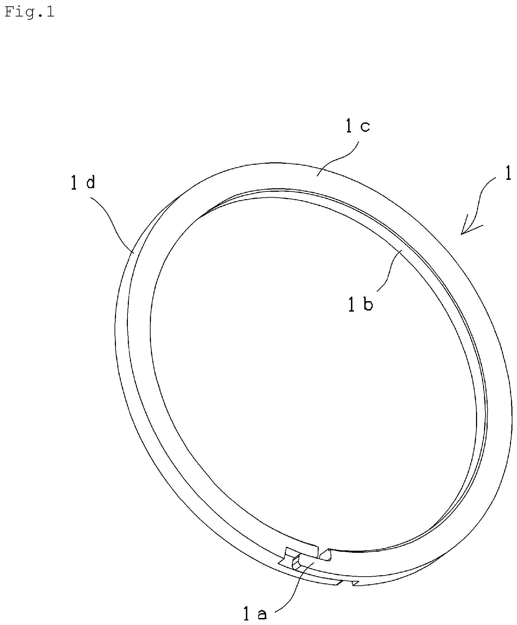

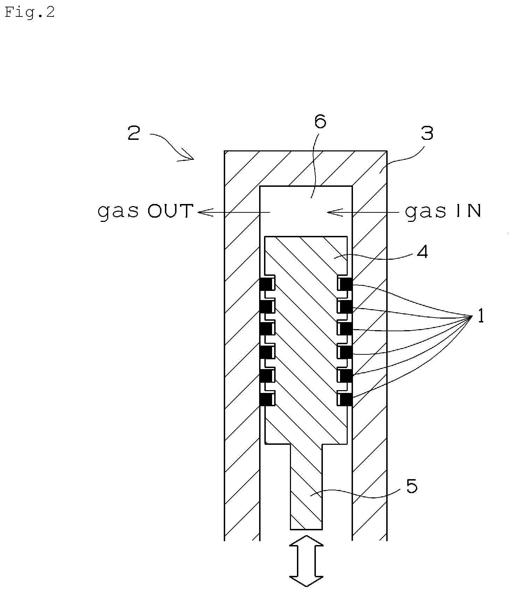

Examples of a piston ring using the resin composition according to the present invention and a reciprocating compressor to which the piston ring is applied are described with reference to Figs. 1 and 2. Fig. 1 is a perspective view of an example of the piston ring. As shown in Fig. 1, a piston ring 1 is an annular body having a generally rectangular section. Each of corner portions between a ring inner peripheral surface 1b and ring side surfaces 1c may be chamfered in a linear or curved manner, or alternatively, in a case in which a piston ring is formed by injection molding, a stepped part serving as an ejecting portion from a molding die may be formed on the corner portion.

The piston ring 1 is a cut-type ring having one abutment 1a and is configured to be radially enlarged using its elastic deformation so as to be mounted to an annular groove of a piston. Since the piston ring 1 has the abutment 1a, the piston ring 1 is radially enlarged due to pressure of gas when in use, so that an outer peripheral surface 1d of the piston ring 1 adheres to an inner peripheral surface of the cylinder. The shape of the abutment 1a may be, but not limited thereto, a straight cut or an angle cut, however a complex stepped cut as shown in Fig. 1 is preferable because of its superior sealing performance.

The piston ring according to the present invention is not limited to that formed by a single member as shown in Fig. 1, and thus the piston ring may be formed by combining a plurality of members to form an annular body.

Fig. 2 is a sectional view of an example of the hydrogen gas reciprocating compressor including the piston ring of Fig. 1. The hydrogen gas reciprocating compressor is installed in a hydrogen station. The compressed hydrogen gas is used for filling the FCV or a hydrogen engine vehicle. A compressing mechanism 2 of the hydrogen gas reciprocating compressor is formed by a cylinder 3 and a piston 4. The piston 4 is connected to a piston rod 5. A plurality of annular grooves for allowing the piston ring 1 to be mounted thereto is formed on an outer peripheral surface of the piston 4. The piston ring 1 is radially enlarged using its elastic deformation so as to be mounted to each annular groove. The number of the piston rings to be mounted to the piston is not especially limited. In the example shown in Fig. 2, six piston rings are mounted. Hydrogen gas is introduced into a compression chamber 6 and is compressed by the piston 4 reciprocating relative to the cylinder 3, and then the hydrogen gas is exhausted outside.

Hereinafter, a method that produces a piston ring as a seal using the sealing resin composition of the present invention is described. Not only the piston ring but also other seal may be similarly produced.

In a case in which the sealing resin composition contains the aromatic polyether ketone resin as a main component, it is preferable that the heat treatment is performed on the injection-molded material, the piston ring formed by machining the inj ection-molded material, or the piston ring molded by the injection molding. The heat treatment is preferably performed at the maximum temperature of 150-330°C (more preferably 200-250°C). Since the melting point of the diphenyl sulfone is 127 °C, and a molecular chain in the aromatic polyether ketone resin easily moves at the glass transition point (143°C) or more and thus the diphenyl sulfone is easily eliminated by evaporation, it is preferable that the maximum temperature of the heat treatment is 150°C or more. In a case in which the maximum temperature is less than 150°C, the content of the sulfur is hardly decreased. In a case in which the maximum temperature of the heat treatment is more than 250°C, the molded body might be deformed when the heat treatment is performed after the injection molding. Further, the maximum temperature is preferably higher than the use temperature of the piston ring, more preferably higher than the use temperature by 30°C or more. The duration time for keeping the maximum temperature is not especially limited, however the duration time may be, for example, 4-8 hours. The heat treatment is effective to decrease the sulfur in the piston ring, and thus the sulfur containing gas generated during the use of the piston ring is decreased in advance. Further, the heat treatment is effective to eliminate the diphenyl sulfone that remains in the aromatic polyether ketone resin, by evaporation.

The heat treatment may be performed in atmosphere. For example, Patent Document 2 discloses a heat treatment that exposes a sliding member to hydrogen atmosphere, as a desulfurizing treatment method for the sliding member. The hydrogen atmosphere is a special atmosphere compared to atmosphere, and thus a special exposing device is necessary that requires a safety measure against fire or explosion caused by hydrogen, which leads to high cost. However, the configuration that the heat treatment is performed in atmosphere eliminates the need for the heat treatment in special atmosphere such as exposure to the hydrogen atmosphere (a desulfurizing treatment) and thus eliminates the need for a special exposing device and a strict safety measure, which leads to low cost.

When the DSC is executed on the inj ection-molded material, the piston ring formed by machining the injection-molded material or the piston ring formed by the injection molding after the heat treatment is applied thereto, an endothermic peak that does not appear without the heat treatment (hereinafter, the endothermic peak is referred to as an endothermic peak due to heat hysteresis) appears in a temperature increasing process. The endothermic peak due to the heat hysteresis appears at a temperature equivalent to the maximum temperature of the heat treatment or a temperature slightly higher (within + 20°C) than the maximum temperature of the heat treatment. Accordingly, the maximum temperature of the heat treatment can be assumed. The piston ring preferably has the endothermic peak due to the heat hysteresis caused by the heat treatment, in a range of 150-330°C in the temperature increasing process of the Differential Scanning Calorimetry (preferably in a rage of 200-250°C) . In this case, the piston ring has other endothermic peak in a range of 150-330°C, in addition to the endothermic peak due to the melting point of the aromatic polyether ketone resin. The DSC may be executed under a condition of, for example, the temperature increasing rate of 15 °C/minute in nitrogen gas.

In a case in which the resin composition contains thermoplastic PI resin as a main component, it is preferable that a crystallizing treatment (heat treatment) is performed on the injection-molded material, the piston ring formed by machining the injection-molded material, or the piston ring molded by the injection molding. For example, in a case in which Aurum produced by Mitsui Chemicals, Inc. is employed as the thermoplastic PI resin, the resin composition is hardly crystallized in the injection molding, so that crystallinity thereof may be enhanced by the crystallizing treatment. The condition of the crystallizing treatment may be that, for example, the maximum temperature of 280-320 °C is kept for two hours or more in atmosphere or in nitrogen. The crystallinity after the crystallizing treatment is preferably 20-40%. The measuring method of the crystallinity is a well-known method such as a method that measures melting calorie of the crystal by the DSC.

In a case in which the resin composition contains the PAI resin as a main component, it is preferable that a post curing (heat treatment) is performed on the inj ection-molded material, the piston ring formed by machining the injection-molded material, or the piston ring molded by the injection molding from a viewpoint of the mechanical strength. The condition of the post curing may be that, for example, the maximum temperature of 250-260 °C is kept for 15 hours or more in atmosphere.

The heat treatment, the crystallizing treatment and the post curing are preferably performed for eliminating the active sulfur slightly contained in the resin composition.

The thermoplastic PI resin contains less sulfur atom because diphenyl sulfone is less therein, and the heat treatment time can be set shorter than that for the PAI resin. Accordingly, the thermoplastic PI resin is especially preferable as the base resin of the sealing resin composition of the present invention.

The content of the sulfur atom in the molded body (a piston ring or the like) formed of the sealing resin composition of the present invention is measured by, for example, Inductively Coupled Plasma Mass Spectrometer (ICP-MS). A triple quadrupole inductively coupled plasma mass spectrometer (ICP-MS/MS) may be also employed for measuring with higher precision. An example of a preparation method before the analysis includes a method that filters a decomposed solution obtained through acid decomposition by a microwave sample preparation device and that obtains supernatant as an analysis sample. Whether or not the decomposition residue contains the sulfur atom may be checked by a known analysis method using an X-ray fluorescence analyzer.

The content of the sulfur atom in the molded body (a piston ring or the like) formed of the sealing resin composition of the present invention is preferably 0.1 wt% or less, more preferably 0.050 wt% or less, further more preferably 0.025 wt% (250 ppm) or less, especially further more preferably 0.020 wt% (200 ppm) or less, relative to the whole of the resin composition (100 wt%).

### EXAMPLE

The present invention is further specifically described with reference to the following Examples. However, the present invention is not limited to the following Examples.

The hydrogen gas permeability of a 50 mm square sheet (thickness of 0.4 mm) of each of unfilled PEEK resin, thermoplastic PI resin, PAI resin and PTFE resin, measured by a measuring method based on JIS K7126-1 is shown in Table 1. The hydrogen gas permeability is measured by a pressure sensor method with a measuring condition of the temperature of 23 ± 2°C and high pressure side pressure of 100 kPa. The result is shown in Table 1.

**Table 1**

| PEEK resin | Thermoplastic PI resin | PAI resin | PTFE resin |
|---|---|---|---|
| 1.7 | 3.1 | 0.7 | 8.2 |

| | | | |
|---|---|---|---|
| unit: × 10⁻¹² mol/ (m²·s·Pa) | | | |

As shown in Table 1, the hydrogen gas permeability of each of the PEEK resin, the thermoplastic PI resin and the PAI resin is smaller than that of the PTFE resin.

### <Test Example A>

### Test Examples A1 to A4

The resin composition with the compound rate (vol%) shown in Table 2 was formed using each of the PEEK resin, the thermoplastic PI resin and the PTFE resin shown in Table 1 as a base resin. The resin composition of Test Example A1 contains the PTFE resin as a filling material, but does not contain the carbon material. The resin composition of Test Example A2 contains the carbon material (a combination of carbon fiber and graphite) as a filling material, but does not contain the PTFE resin. The resin composition of Test Example A3 contains both the PTFE resin and the carbon material as a filling material. The raw material employed in each resin composition is as below.

### (1) PEEK resin (PEEK)

PEEK 450P (melt viscosity of 350 Pa·s) produced by Victrex Japan Inc.

### (2) Thermoplastic polyimide resin (TPI)

PD400 produced by Mitsui Chemicals, Inc.

### (3) PTFE resin (PTFE-1)

Teflon (registered trademark) 7-J produced by Chemours-Mitsui Fluoroproducts Co.,Ltd.

### (4) PTFE resin (PTFE-2)

KTL-450 (median particle diameter of 22 µm) produced by KITAMURA LIMITED

### (5) Carbon fiber (CF-1)

Kreca M-107T (average fiber length of 400 µm) produced by Kureha Corporation

### (6) Carbon fiber (CF-2)

HT M100 40MU (average fiber length of 40 µm) produced by TEIJIN LIMITED

### (7) Graphite (GRP)

TIMREX KS25 (median particle diameter of 10 µm) produced by Imerys Graphite & Carbon Japan Ltd.

Pellets were formed using a twin-screw melt extruder from the powder of the dry-mixed raw materials of the resin composition of each of Test Examples A1-A3, and then a type-4 dumbbell test piece (thickness of 3.2 mm) based on ASTM D638 was molded from the pellets by the injection molding.

The type-4 dumbbell test piece formed of the PEEK resin composition (Test Examples A1 and A2) was subjected to the heat treatment at the maximum temperature of 200°C kept for four hours . The type-4 dumbbell test piece formed of the thermoplastic polyimide resin composition (Test Example A3) was subjected to the crystallizing treatment at the maximum temperature of 320°C kept for two hours. The type-4 dumbbell test piece that has been subjected to the heat treatment or the crystallizing treatment was exposed to the hydrogen gas with the pressure of 82 MPa and the temperature of 200°C for 192 hours, and the dimensional (thickness) change rate and the retention rate of the tensile strength were measured after the exposure. Further, the tensile strength and the content of the sulfur atom were measured before the exposure. The evaluation result is shown in Table 2.

The content of the sulfur atom in the type-4 dumbbell test piece of each of Test Examples A1-A3 is measured as below. The type-4 dumbbell test piece was frozen and crushed, and then a decomposed solution obtained through acid decomposition thereof using a microwave sample preparation device was filtered, so that supernatant was obtained as an analysis sample. The analysis was executed on the analysis sample using the ICP-MS/MS. It was checked using the X-ray fluorescence analyzer that the decomposition residue does not contain the sulfur atom.

A baked body was formed by compression-molding and baking the powder of the dry-mixed raw materials of the PTFE resin composition, which is incapable of being subjected to the injection molding, of Test Example A4, and then the baked body was machine-processed into a dumbbell test piece based on ASTM D1708 (thickness of 1 mm). In Test Example A4, the tensile strength was only measured.

**Table 2**

| | | | Example A1 | Example A2 | Example A3 | Example A4 |
|---|---|---|---|---|---|---|
| Compound rate (vol%) | Base resin | (1) PEEK | 90 | 70 | - | - |
| | | (2) TPI | - | - | 85 | - |
| | | (3) PTFE-1 | - | - | - | 90 |
| | Filling material | (4) PTFE-2 | 10 | - | 5 | - |
| | | (5) CF-1 | - | 25 | - | - |
| | | (6) CF-2 | - | - | 10 | 10 |
| | | (7) Graphite | - | 5 | - | - |
| Evaluation | Dimensional (thickness) change rate (%) | | - 0.1 | - 0.1 | + 0.0 | - |
| | Retention rate of tensile strength (%) | | 100 | 101 | 93 | - |
| | tensile strength before exposure (MPa) | | 85 | 114 | 51 | 25 ¹⁾ |
| | Hydrogen gas permeability of base resin × 10⁻¹² mol/ (m²·s·Pa) | | 1.7 | 1.7 | 3.1 | 8.2 |
| | Measured value of sulfur atom (ppm) ²⁾ | | 130 | 110 | < 5 | - |
| Possibility of Injection molding | | | Possible | Possible | Possible | Impossibl e |

1) since injection molding was impossible, the measurement was executed on a dumbbell test piece based on ASTM D1708 formed by machine-processing a compression molding material
2) measured value by ICP-MS/MS (lower limit of quantitation of 5 ppm)

As shown in Table 2, in each of the type-4 dumbbell test pieces of the PEEK resin composition (Test Examples A1 and A2) and the thermoplastic PI resin composition (Test Example A3), the dimensional (thickness) change rate between before and after the exposure to the hydrogen gas is ± 0.1% or less, and the retention rate of the tensile strength is 90% or more. Thus, the molded body formed of the resin composition of each of Test Examples A1-A3 can show stable sealing performance because the dimensional change and the property change are extremely small even in the high temperature and high pressure hydrogen gas. Further, in the molded body formed of the resin composition of each of Test Examples A1-A3 produced as described above, the content of the sulfur atom is 200 ppm or less, in particular, 100 ppm or less in Test Example A3.

### <Test Example B>

### Test Examples B1 to B6

The resin composition with the compound rate (vol%) shown in Table 3 was formed using each of the PEEK resin, the PEK resin, the thermoplastic PI resin, the PTFE resin and the tetrafluoroethylene-perfluoro alkylvinyl ether copolymer (PFA) resin as a base resin. The resin composition of Test Example B1 contains the PTFE resin as a filling material, but does not contain the carbon material. The resin composition of each of Test Examples B2 and B4 contains both the PTFE resin and the carbon material (a combination of the carbon fiber and the graphite) as a filling material. The resin composition of Test Example B3 contains both the PTFE resin and the carbon fiber.

The raw material employed in each resin composition is as below. The content of the sulfur atom in each of the carbon fiber (CF-1) and the carbon fiber (CF-2) is 200 ppm or less based on the measurement of ICP-MS/MS. The content of the sulfur atom in the graphite is 50 ppm or less based on the measurement of ICP-MS/MS.

### (1) PEEK resin (PEEK)

PEEK 450P (glass transition point of 143°C, melt viscosity of 350 Pa·s (shear rate of 1,0001s and temperature of 400°C)) produced by Victrex Japan Inc.

### (2) PEK resin (PEK)

HT P22 (glass transition point of 152°C, melt viscosity of 190 Pa·s (shear rate of 1,0001s and temperature of 400°C)) produced by Victrex Japan Inc.

### (3) Thermoplastic PI resin (TPI)

PD400 produced by Mitsui Chemicals, Inc.

### (4) PTFE resin (PTFE-1)

Teflon (registered trademark) 7-J produced by Chemours-Mitsui Fluoroproducts Co.,Ltd.

### (5) PFA resin (PFA)

Teflon (registered trademark) 420HP-J produced by Chemours-Mitsui Fluoroproducts Co.,Ltd.

### (6) PTFE resin (PTFE-2)

KTL-450 (median particle diameter of 22 µm) produced by

### KITAMURA LIMITED

### (7) Carbon fiber (CF-1)

Kreca M-107T (average fiber length of 400 µm) produced by Kureha Corporation

### (8) Carbon fiber (CF-2)

HT M100 40MU (average fiber length of 40 µm) produced by

### TEIJIN LIMITED

### (9) Graphite (GRP)

TIMREX KS25 (median particle diameter of 10 µm) produced by Imerys Graphite & Carbon Japan Ltd.

Pellets were formed using a twin-screw melt extruder from the powder of the dry-mixed raw materials of the resin composition of each of Test Examples B1-B4 and B6, and then a type-4 dumbbell test piece (thickness of 3.2 mm) based on ASTM D638 was molded from the pellets by the injection molding.

The type-4 dumbbell test piece formed of each of the PEEK resin composition (Test Examples B1 and B2) and the PEK resin composition (Test Example B3) was subjected to the heat treatment at the maximum temperature of 200°C kept for four hours . The type-4 dumbbell test piece formed of the thermoplastic PI resin composition (Test Example B4) was subjected to the crystallizing treatment at the maximum temperature of 320°C kept for two hours. A center portion of the type-4 dumbbell test piece that has been subjected to the heat treatment or the crystallizing treatment was cut out by the machine-processing into a strip-shaped test piece having a size of 2 mm × 5 mm × 45 mm. The type-4 dumbbell test piece formed of the PFA resin composition (Test Example B6) was not subjected to the heat treatment or the crystallizing treatment, and was cut out by the machine-processing into the similar strip-shaped test piece.

The content of the sulfur atom in the type-4 dumbbell test piece of each of Test Examples B1-B4 is measured similar to Test Example A.

A baked body was formed by compression-molding and baking the powder of the dry-mixed raw materials of the PTFE resin composition, which is incapable of being subjected to the injection molding, of Test Example B5, and then the baked body was cut out by machine-processing into a strip-shaped test piece having a size of 2 mm × 5 mm × 45 mm.

### Dynamic mechanical analysis

The dynamic mechanical property relative to the temperature of the strip-shaped test piece of each of Test Examples B1-B6 was measured under a condition with a tensile mode, a distance between chucks of 20 mm, a frequency of 10 Hz, strain amplitude of 10 µm (sine wave) and a temperature increasing rate of 2 °C/minute, using the dynamic mechanical analyzer DMS6100 (Hitachi High-Tech Science Corporation). The peak temperature of the loss tangent tan δ, the storage modulus E₁' at the temperature of 30°C, the storage modulus E₂' at the temperature of 200°C, the ratio (E₂' / E₁'), and the measurement result of the sulfur atom are shown in Table 3.

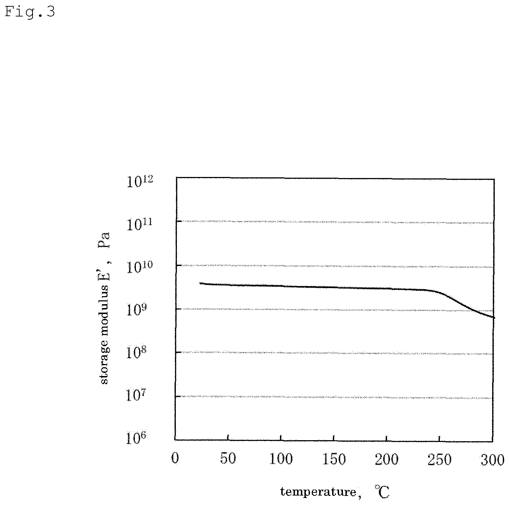

Further, the relation between the temperature and the storage modulus E' of Test Example B4 is shown in Fig. 3, and the relation between the temperature and the loss tangent tan δ of Test Example B4 is shown in Fig. 4. As shown in Fig. 3, the storage modulus E' is kept while not decreasing so much in a temperature range of 30-200°C. Further, according to the loss tangent tan δ curve in Fig. 4, the peak temperature of the loss tangent tan δ of Test Example B4 is calculated as 273°C.

### Friction and wear test

An injection-molded material having a size of φ8 × 20 mm was molded by the injection molding using the above-described pellets of the resin composition of each of Test Examples B1-B4 and B6. The injection-molded material formed of each of the PEEK resin composition (Test Examples B1 and B2) and the PEK resin composition (Test Example B3) was subjected to the heat treatment at the maximum temperature of 200°C kept for four hours . Further, the injection-molded material formed of the thermoplastic PI resin composition (Test Example B4) was subjected to the crystallizing treatment at the maximum temperature of 320°C kept for two hours.

After the heat treatment or the crystallizing treatment, a pin test piece having a size of φ3 × 13 mm was formed by the machine-processing. In the PTFE resin composition, which is incapable of being subjected to the injection molding, of Test Example B5, a baked body was formed by compression-molding and baking the powder of the dry-mixed raw materials of the PTFE resin composition, and then the baked body was cut out by the machine-processing into the similar pin test piece.

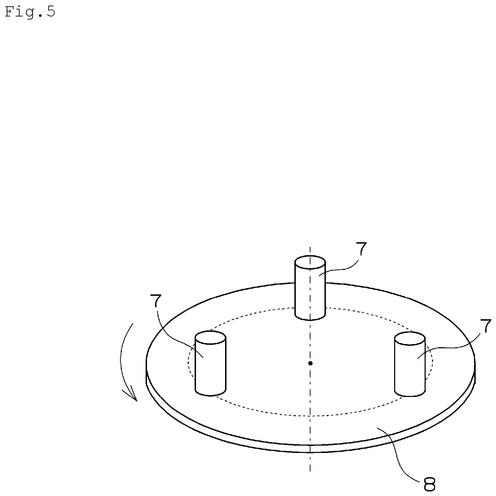

The friction and wear test was executed on the obtained pin test piece using a pin-on-disk tester shown in Fig. 5. As shown in Fig. 5, test faces of three pin test pieces 7 were pressed on a surface of a rotary disk 8 of the tester at surface pressure described below, and then the rotary disk 8 was rotated at a temperature of 150°C in atmosphere. A specific test condition is described below. The material of the rotary disk 18 is SUS304. The test condition is considered as a use condition of the piston ring in the hydrogen gas reciprocating compressor.

### Test condition

Rotation speed: 4.8 m/minute
Surface pressure: 4 MPa
Lubrication: None (dry)
Temperature: 150°C
Time: 50 hours

A change amount of the height of each of the pin test pieces 7 after the test from the original height was measured, and a specific wear rate was calculated based on the average value of the three change amounts. The result is shown in Table 3.

**Table 3**

| | | | Example B1 | Example B2 | Example B3 | Example B4 | Example B5 | Example B6 |
|---|---|---|---|---|---|---|---|---|
| Compound rate (vol%) | Base resin | (1) PEEK | 95 | 70 | - | - | - | - |
| | | (2) PEK | - | - | 72 | - | - | - |
| | | (3) TPI | - | - | - | 70 | - | - |
| | | (4) PTFE-1 | - | - | - | - | 90 | - |
| | | (5) PFA | - | - | - | - | - | 91 |
| | Filling material | (6) PTFE-2 | 5 | 15 | 15 | 15 | - | - |
| | | (7) CF-1 | - | 10 | 13 | - | - | - |
| | | (8) CF-2 | - | - | - | 10 | 10 | 9 |
| | | (9) Graphite | - | 5 | - | 5 | - | - |
| Evaluation | Peak temperature of loss tangent tan δ (°C) | | 166 | 165 | 175 | 273 | 137 | 95 |
| | Storage modulus E₁' at 30°C (Pa) | | 3.5×10⁹ | 3.9×10⁹ | 4.1×10⁹ | 3.7×10⁹ | 1.3×10⁹ | 1.9×10⁹ |
| | Storage modulus E₂' at 200°C (Pa) | | 4.9×10⁹ | 1.3×10⁹ | 2.0×10⁹ | 3.1×10⁹ | 2.2×10⁸ | 2.0×10⁸ |
| | E₂' / E₁' | | 0.14 | 0.33 | 0.51 | 0.84 | 0.17 | 0.10 |
| | Measured value of sulfur atom (ppm) ¹⁾ | | 120 | 130 | 90 | < 5 | | |
| | Specific wear rate × 10⁻⁸ mm³/N·m | | 324 | 202 | 99 | 111 | 601 | 798 |

| | | | | | | | | |
|---|---|---|---|---|---|---|---|---|
| 1) measured value by ICP-MS/MS (lower limit of quantitation of 5 ppm) | | | | | | | | |

As shown in Table 3, in the PEEK resin composition (Test Examples B1 and B2), the PEK resin composition (Test Example B3) and the thermoplastic PI resin composition (Test Example B4), the storage moduli E₁' and E₂' are 4.0 × 10⁸ or more, and the peak temperature of the loss tangent tan δ is 150°C or more. Thus, in the molded body formed of the resin composition of each of Test Examples B1-B4, since the storage modulus E₂' and the peak temperature of the loss tangent tan δ are high, the molded body is hardly deformed at the high temperature and is suitably used as a seal, in particular a piston ring of a reciprocating compressor that compresses hydrogen gas. Further, Test Example B4 fulfills that the ratio (E₂' / E₁') is in a range of 0.70-1.0. Thus, the change of the elastic modulus relative to temperature is small, and when the molded body formed of the resin composition of Test Example B4 is applied to a seal, stable sealing performance can be maintained in a wide temperature range from a room temperature to a high temperature. Accordingly, the molded body formed of the resin composition of Test Example B4 is especially suitable as a seal.

Since the storage modulus E₂' of the molded body formed of the resin composition of each of Test Examples B5 and B6 is a half or less of the storage modulus E₂' of that of Test Example B1, the deformation or wear thereof in use might be large when the molded body is applied to a seal used at a high temperature, such as a piston ring used in a hydrogen gas reciprocating compressor. Each of Test Examples B1-B4 of which the storage modulus E₂' is 4.0 × 10⁸ Pa or more is superior in wear resistance compared to Test Examples B5 and B6. In particular, each of Test Examples B3 and B4 of which the storage modulus E₂' is 2.0 × 10⁹ Pa or more is particularly superior in wear resistance.

In the molded body of the resin composition of each of Test Examples B1-B4, the content of the sulfur atom is 200 ppm or less, in particular in each of Test Examples B3 and B4, the content of the sulfur atom is 100 ppm or less.

### INDUSTRIAL APPLICABILITY

The sealing resin composition of the present invention is preferably used as a seal for sealing gas. For example, the dimensional change and the property change due to the hydrogen gas are small, and thus the seal can be used for a long time. Further, the sealing resin composition is hardly deformed at a high temperature, and the change of the elastic modulus thereof relative to the temperature is small. Accordingly, when the sealing resin composition is used as a hydrogen gas seal, stable sealing performance can be maintained in a wide temperature range from a room temperature to a high temperature. In particular, the sealing resin composition is suitable to a piston ring of a hydrogen gas reciprocating compressor used in the high temperature and high pressure hydrogen gas.

### REFERENCE SIGNS LIST

- 1:: piston ring
- 2:: compressing mechanism
- 3:: cylinder
- 4:: piston
- 5:: piston rod
- 6:: compression chamber
- 7:: pin test piece
- 8:: rotary disk

## Claims

1. A sealing resin composition that is used in a seal for sealing gas,
wherein, when a molded body of the sealing resin composition is exposed to the gas with a pressure of 82 MPa and a temperature of 200°C for 192 hours, a dimensional change rate of the molded body after the exposure is ± 1.0% or less, relative to the molded body before the exposure.

2. The sealing resin composition as defined in claim 1, wherein, when the molded body of the sealing resin composition is exposed to the gas with a pressure of 82 MPa and a temperature of 200°C for 192 hours, a retention rate of the tensile strength of the molded body after the exposure is 80% or more as the tensile strength of the molded body before the exposure is defined as 100%.

3. The sealing resin composition as defined in claim 1, wherein the tensile strength of the molded body of the sealing resin composition is 100 MPa or more by a measuring method based on ASTM D638.

4. The sealing resin composition as defined in claim 1, wherein a gas permeability of a base resin that is a main component of the sealing resin composition is 4.0 × 10⁻¹² mol/ (m²·s·Pa) or less by a measuring method based on JIS K7126-1.

5. The sealing resin composition as defined in claim 4, wherein the base resin is aromatic polyether ketone resin, thermoplastic polyimide resin, or polyamideimide resin.

6. The sealing resin composition as defined in claim 1, wherein the content of a sulfur atom in the molded body of the sealing resin composition is 250 ppm or less.

7. The sealing resin composition as defined in claim 1, wherein the gas is hydrogen gas.

8. A seal formed of the molded body of the sealing resin composition as defined in claim 1.

9. The seal as defined in claim 8, serving as a piston ring of a reciprocating compressor that compresses hydrogen gas.

10. A sealing resin composition that is used in a seal for sealing gas,
wherein, in the dynamic mechanical analysis of a molded body of the sealing resin composition, each of the storage modulus E₁' at a temperature of 30°C and the storage modulus E₂' at a temperature of 200°C is 4.0 × 10⁸ Pa or more.

11. The sealing resin composition as defined in claim 10, wherein a peak temperature of the loss tangent tan δ of the molded body of the sealing resin composition is 150°C or more.

12. The sealing resin composition as defined in claim 10, wherein the storage modulus E₁' and the storage modulus E₂' fulfill the formula of E₂' / E₁' = 0.70 to 1.0.

13. The sealing resin composition as defined in claim 10, wherein a base resin of the sealing resin composition is aromatic polyether ketone resin, thermoplastic polyimide resin, or polyamideimide resin.

14. The sealing resin composition as defined in claim 13, wherein the glass transition point of the aromatic polyether ketone resin is 150°C or more.

15. The sealing resin composition as defined in claim 10, wherein:
the sealing resin composition contains carbon material of which the content of a sulfur atom is 200 ppm or less,
the carbon material is at least one of carbon fiber, graphite, and coke powder, and
the total content of the carbon material (s) is 5-50 vol% relative to the whole of the sealing resin composition.
